# EUROPEAN PATENT APPLICATION

(11) **EP 2 910 950 A1**
(43) Date of publication of application: **26.08.2015**
(21) Application number: 14000603.2
(22) Date of filing: 20.02.2014
(51) Int. Cl.: G01N 35/00, G01N 30/06, G01N 30/20, G01N 30/08, G01N 30/24, G01N 1/38, G01N 1/40

(54) **Analytic method**

(71) Applicant: CTC Analytics AG, 4222 Zwingen (CH); DANI Instruments S.A., 6594 Contone (CH)
(72) Inventor: Bergna, Manuela, 20900 Monza (IT); Schüler, Kai Heinrich, 9114 Hoffeld (CH); Läubli, Thomas, 8824 Schönenberg (CH); Fasanotti, Massimiliano Saini, 6932 Breganzona (CH)
(74) Representative: Kessler, Stephan

(57) **Abstract**

In a method for analysing a sample, a plurality of sample preparation devices (200) and an automatic analytic device (300) for analysing the sample are used, wherein said plurality of sample preparation devices (200) and the automatic analytic device (300) are connected to each other by a data processing unit in order to receive, process and send data from and/or to each one of said sample preparation devices and the automatic analytic device (300). The method comprises the steps of preparing a first portion of the sample by a first sample preparation device (200); analysing said first portion by the automatic analytic device (300) in order to get a first result; comparing the first result with a value dependent decision criteria to get a first decision value or a second decision value by the data processing unit. If the decision value is the second decision value, a second portion of the same sample by the second sample preparation device (200) is prepared and analysed by the automatic analytic device (300) in order to get a second result. The second result is compared with said value dependent decision criteria value to get the first decision value or the second decision value by the data process unit. The preceding steps are repeated until the first decision value is obtained.

## Description

### Technical Field

The invention relates to a method for analysing a sample, using a plurality of sample preparation devices, and an automatic analytic device for analysing the sample, wherein said plurality of sample preparation devices and the automatic analytic device are connected to each other by a data processing unit in order to receive, process and send data from and/or to each one of said sample preparation devices and the automatic analytic device.

### Background Art

Methods for analysing a plurality of samples are well known in the prior art. The US 7,603,888 B2 (Thermo) for example discloses an automatic sampler associable with chromatographic analysis instruments. Since the usage time of the sampler is less than the total time regarding the chromatography analysis, it was thought by Thermo of using a single sampler in functional association with two instruments that is a single sampler to feed samples to be analysed by two chromatographic analysis instruments. An automatic sampler can further be used to feed samples to two or more separate chromatographic analysis instruments. The chromatographic analysis instruments are gas chromatographs (GC), and/or liquid chromatographs (LC). The automatic sampler can be of the X, Y, Z, three-axis type. Therewith, the repeatability can be achieved together with an increase in the useful operational time.

Further, the US 5,492,831 A (Lachat) discloses an apparatus and a method for performing chemical analyses using at least two analysis instruments and at least one peripheral device capable of serving either instrument, wherein a control system commands and coordinates sharing of the peripheral device by the samples and flexible scheduling of various analytical tests and methods. The peripheral device can be a sampler, such as an XYZ sampler. The system includes a multi-channel FIA instrument, an IC instrument and an autosampler.

The known methods are capable to improve the efficiency of the analysis and to reduce costs, since they use only one autosampler in connection with several analytic devices.

However, the aim of the invention is to present a method for analysing a sample, which is efficient and requires less effort in method development.

### Summary of the invention

It is the object of the invention to create a method for analysing a sample using a plurality of sample preparation devices, and an automatic analytic device for analysing the sample, where the analysis of a sample is simplified.

The solution of the invention is specified by the features of claim 1. According to the invention the method comprises the following steps:
a. preparing a first portion of the sample by a first sample preparation device;
b. analysing said first portion by the automatic analytic device in order to get a first result;
c. comparing the first result with a value dependent decision criteria to get a first decision value or a second decision value by the data processing unit;
d. if the decision value is the second decision value, preparing a second portion of the same sample by the second sample preparation device and analysing said second portion by the automatic analytic device in order to get a second result;
e. comparing the second result with said value dependent decision criteria to get the first decision value or the second decision value by the data process unit;
f. repeating the preceding steps until the first decision value or another criteria is obtained.

The inventive method uses at least two sample preparation devices, namely the first sample preparation device and the second sample preparation device. The at least two sample preparation devices are connected to one or more automatic analytic device by a data processing unit, wherewith the sample preparation devices and the automatic analytic device are capable to control each other according to the data received. However, in a preferred embodiment, the sample preparation devices are controlled by the automatic analytic device.

The data preferably comprises parameter of the sample preparation device, such as temperature, sample volume, duration of the preparation, pressure etc. Further, the data preferably comprises results measured or determined by the automatic analytic device, e.g. a concentration of a substance in a sample, a physical property like but not limited to pH, translucence, optical absorption, electric conductivity, viscosity, density, turbidity, mass s etc. A plurality of devices is known to achieve these results, i.e. automatic analytic devices comprising a chemical or physical detector. Possible devices for the use in the inventive method are discussed below.

An important advantage of the inventive method is, that a sample can be prepared by the at least two sample preparation devices in a different manner in order to improve the result of the analysis by the automatic analytic device. Therewith, the analytical device can be protected from contamination and damage in order to increase the lifetime of the instrument and the disposables used with and by the instrument like traps and columns. This process can be achieved automatically by the data connection between the sample preparation devices and the automatic analytic device.

The portion of the sample can be either one of several vials each comprising a sample volume of the same sample pool or the portion of the sample can come from one vial comprising a sample.

The device can e.g. comprise two different sample preparation devices, where a first portion of a sample is analysed by the first sample preparation device. After preparing the sample, it is analysed by the automatic analytic device, The result of the automatic analytic device will be compared by the data processing unit with a decision criteria. The decision criteria can be either a value "pass" or "fail". However, the decision criteria "fail" can be subdivided in further decision criteria, where according to the decision criteria one or more parameters of the sample preparation device and/or the analytic device can be adjusted.

The decision value can also be an intensity response of any detector, where the first sample preparation device results in a different intensity response of the portion of the sample than the second sample preparation device. For example, a decision value "fail" may occur, if the concentration is too high or too low for the automatic analytic device, where the maximal or minimal concentration defines a decision criteria. In this case, the automatic analytic device will send data in relation to the measured portion of the sample to the other sample preparation device, wherewith the second portion of the sample can be prepared as to achieve an intensity response matching to the automatic analytic device.

Further, the value dependent decision criteria as well as the decision values can be adjusted or even defined while running the method, i.e. the decision values and the value dependent decision criteria need not to be fixed. Therewith, a method-loop can be achieved, which optimises the results of the analytic device according to the preceding results. For example the value dependent decision criteria can be determined only after obtaining the first result of the analytic device. If the first decision value cannot be optained, the loop of the method can be interrupted by another criteria, e.g. the method can be interrupted after several (two, three, ..., n) loops.

However, the device can also comprise more than two different sample preparation devices, wherewith the above described steps can be repeated using the plurality of sample preparation devices in order to get the first decision value, e.g. a decision value "pass".

In some cases, it is possible to combine two or more properties in one sample preparation device, wherewith after a decision "fail" the property of the sample preparation device can be adjusted or changed in order to get a value "pass" by another portion of the sample.

In another embodiment, the decision value is a statistical parameter calculated by the data processing unit from several measurements of one or more portion of the sample. In this case, the decision "fail" is obtained if the calculated statistical parameter from the measurements lies outside the decision value. The decision value can be a variance, standard deviation, average absolute deviation etc.

In a further embodiment, several decision criteria can be considered in order to decide which sample preparation device in which configuration shall be used for the preparation of the next portion of the sample.

The data processing unit can either be an autonomic or stand-alone unit, e.g. a computer, or the data processing unit can be an integral part of one of the sample preparation devices. Preferably, the data processing unit is a program running on a personal computer. However, the data processing unit can also be included by the automatic analytic device. Further, the data processing unit can also be set together by several devices, i.e. by several sample preparation devices or by one or more of the sample preparation devices and the automatic analytic device.

Preferably, after one or more repeating of the steps mentioned above, the method comprises further the following features:
a. a recent result is compared by the data processing unit with the value dependent decision criteria and, if available, former results to determine if going in the first direction "pass", that is the result is acceptable, or a second direction "fail", that is to perform a next step;
b. if the decision is to go in the second direction, preparing a further portion of the same sample by the second sample preparation device, whereby a parameter of the second sample preparation device or of the analytic device is adjusted, and analysing said further portion by the automatic analytic device in order to get a further result;
c. applying a value dependent decision criteria by comparing the further result and former results with the decision value by the data processing unit to determine: if going in a first direction "pass", that is the result is acceptable, or in a second direction "fail", that is to perform a next step.
d. repeating the preceding steps d) and e) until the decision to go in the first direction "pass" is taken, that is the analytic result is acceptable, or another criteria is applied, in particular to stop the analyses.

Therewith, the previous results can be integrated into the method. If consecutive results showing a tendency in direction of the decision criteria "pass", the data processing unit can calculate precisely the necessary adjustment of a parameter in order to achieve the criteria "pass" as fast as possible, i.e. by analysing as few portions of the sample as possible. Therefore, the data processing unit can e.g. calculate a regression function in order to estimate, in particular inter- or extrapolate one or more parameters. If the decision criteria are not reachable by adjusting one or more parameters, an analysis mode or the sample preparation device can also be changed. This situation can occur e.g. because the results does not lie in a predetermined band width.

However, according to the analysis of the preceding results, a conclusion could also lead to a decision "abort", because e.g. the band width is not reached or a necessary correction of the parameter is not possible, since e.g. the calculated parameter is out of the possible range.

The skilled person is aware of several techniques to monitor and to control the tendency of the results of the automatic analytic device.

However, it is still possible to only incorporate the former result of the automatic analytic device, in order to keep the method as simple as possible.

The data processing unit preferably improves also the automatic analytic device according to a received result by adapting at least one parameter. This procedure is advantageous since the result of a measurement does not only depend on the sample preparation, but also from the parameters of the analytic device. The parameter to be adapted depends mainly from the chosen analytic device. The skilled person knows lots of possible parameter for several possible analytic devices.

On the other hand, it is not essential for the invention to have an opportunity to adapt a parameter of the analytic device according to a measured result. The data processing unit can be capable to decide according to a measured result which leads to a decision value "fail", if either another sample preparation device has to be chosen or a parameter of the analytic device has to be adapted or both, another sample preparation device has to be combined with the adapted analytic device.

Preferably the automatic analytic device comprises a plurality of different chromatographic channels, wherein the data processing unit decides according to a received result to use a specific chromatographic channel for analysing the subsequent portion of the sample. In this case, the above mentioned parameter is the choice of a chromatographic channel. Therewith, a retention time of the analysed substance in the portion of the sample can be adjusted to improve the separation and the results, e.g. to shift peaks of other substances away.

Additionally or alternative, also the temperature of the chromatographic channel, or the liquid phase, or the solvent mixture can be adapted according to the measured results.

Preferably any portion of sample is prepared by any of the sample preparation devices before analysing said portion of sample.

Alternatively, the sample is prepared by several sample preparation devices until the decision value "pass" is achieved, where using all sample preparation devices is not mandatory.

Preferably a headspace device or a syringe headspace device or a SPME-device is used as a sample preparation device.

For the sample preparation using headspace technique, the sample is held in a container with an airtight seal. The container or vial is tempered in an incubation oven to thermostat the container or vial so the sample reaches the thermodynamic equilibrium. Inert gases are passed into the container or a vacuum is established such that the volatile compounds are removed from the headspace. These compounds are captured using a variety of techniques among them cold surfaces, solvent traps, and adsorbent materials, with the latter techniques capable of longer periods of collection. The main principle of headspace technique is well known by the person skilled in the art.

Solid-phase microextraction, or SPME, is another sample preparation technique. SPME involves the use of a fiber coated with an extracting phase, that can be a liquid (polymer) or a solid (sorbent), which extracts different kinds of analytes (including both volatile and non-volatile) from different kinds of samples, that can be in liquid or gas phase. The quantity of analyte extracted by the fibre is proportional to its concentration in the sample as long as equilibrium is reached or, in case of short time pre-equilibrium, with help of convection or agitation. After extraction of the analyte from the sample, the SPME fiber is usually transferred to an injection port of separating instruments, e.g. a gas chromatograph, where desorption of the analyte takes place and analysis is carried out. The attraction of SPME is that the extraction is fast and simple and can be done usually without solvents, and detection limits can reach parts per trillion (ppt) levels for certain compounds.

In a preferred embodiment, at least two different sample preparation devices are provided. However, two used sample preparation devices can also be identical, if the preparation time is about twice the analysis time of the analytic device. Alternatively the capacity of the sample preparation device can be adapt to the performance of the analytic device. Further it is possible, that two sample preparation devices are of the same principle, e.g. headspace, but differs in at least one characteristic.

The skilled person is aware of further possible sample preparation devices, e.g. a simple heating or shaking device.

Preferably the headspace device is one of an ITEX-device, a loop headspace device or a syringe headspace device.

The ITEX-device performs enrichment of volatile or semi-volatile compounds during headspace analysis. A microtrap filled with adsorbent material, such as Tenax or activated charcoal is placed between the Headspace syringe and the syringe needle. Using the syringe as a pump, a part of the gaseous phase of the sample vial is pumped repeatedly through the microtrap, wherewith the analyte is adsorbed in the microtrap. For desorption, the microtrap can be heated and purged by a gas e.g. in a gas chromatograph. This system setup allows rapid, simple and efficient extraction of volatile and semi-volatile sample compounds. To gain sensitivity as a possible parameter mentioned above, simply the number of pumping strokes can be increased. Further several different vials containing the same sample can be extracted in order to increase the sensitivity. The microtrap is preferably rapidly flash heated for thermal desorption into the GC injector, wherewith compounds reach the GC column as a narrow band.

Instead of a microtrap, the headspace device can comprise a loop. In this embodiment, the loop is filed with headspace of the container and then the gas flow is redirected in order to flush the sample into the analytic device.

In a sample preparation using syringe headspace technique, the portion of the sample is taken by a syringe from the headspace of the container in order to purge the sample into the analytic device subsequently.

Alternatively or additionally the sample preparation device can comprise a so called balanced-pressure system. Another common technique is the balanced-pressure system, which is capable of generating results with a high degree of repeatability. It uses a seamless injection directly from the vial into the carrier gas stream without additional moving parts other than a valve and a needle. The balanced-pressure system uses an incubation oven to thermostat the vial so the sample reaches equilibrium. During these initial steps, a needle is inserted into the vial and then is pressurized with a carrier gas. After the vial is pressurized and equilibrium has been reached, the valve is switched for a specific amount of time to redirect the sample into the transfer line and onto the column.

However, the skilled person knows further suitable sample preparation techniques.

In a preferred embodiment, some portions of said sample are prepared by SPME or ITEX and other portions of sample are prepared by a loop headspace device. Therewith different headspace techniques can be compared in order to improve the results of the analytic device.

On the other hand, also other combinations of sample preparation devices can be used.

Preferably a plurality of vials comprising the different portions of said sample, are transported from a sample storage to said sample preparation devices by a transport device, in particular by a x,y,z-robot. Therewith, the method can be carried out automatically.

It is clear, that in some cases also another transport device can be used, e.g. an x,z-robot. Alternatively, the transport device can be omitted if e.g. the sample storage is comprised by a sample preparation device.

After transferring a part of a portion of sample from a vial to the automatic analytic device, the vial is transported preferably back to the sample storage by the transport device. Therewith, the samples for the analysis can be exchanged efficiently. In particular it is possible to make several vials with different sample concentrations available, wherewith the data processing unit can decide to choose another concentration of the sample for a next analysis according to the present results of the automatic analytic device.

In variants, the vial can be discarded after the analysis of the sample.

Preferably at least a portion of sample is tempered at the sample storage in an incubator. In particular for headspace technique the sample has to be tempered so the sample reaches equilibrium. A more efficient sample preparation is achieved by the incubator at the sample storage, since the sample is already tempered when transferred to the sample preparation device.

In variants, the incubator can be omitted.

An arrangement for analysing a sample, comprising a plurality of sample preparation devices, an automatic analytic device, a transporting device and an incubator for incubating at least a portion of sample.

At least one of said sample preparation devices of the arrangement preferably comprises a head space device, in particular a syringe head space device, a loop head space device or an ITEX head space device as discussed above.

Preferably at least one of said sample preparation devices comprises a syringe head space device, wherein the transporting device is capable to transport the syringe. The combination of the syringe head space device with a transport device capable to transport the syringe leads to a highly efficient and low cost arrangement of a sample preparation device and a transport device, because the transport device is used for both, transporting the syringe and transporting the vials.

Other advantageous embodiments and combinations of features come out from the detailed description below and the totality of the claims.

### Brief description of the drawings

The drawings used to explain the embodiments show:
- Fig. 1: a schematic frontal view of an arrangement;
- Fig. 2: the view according to fig. 1 while picking up a vial from a rack;
- Fig. 3: the view according to fig. 1 while positioning the vial in the sample preparation device; and
- Fig. 4: the view according to fig, 1 while injecting a sample in the analytic device.

In the figures, the same components are given the same reference symbols.

### Preferred embodiments

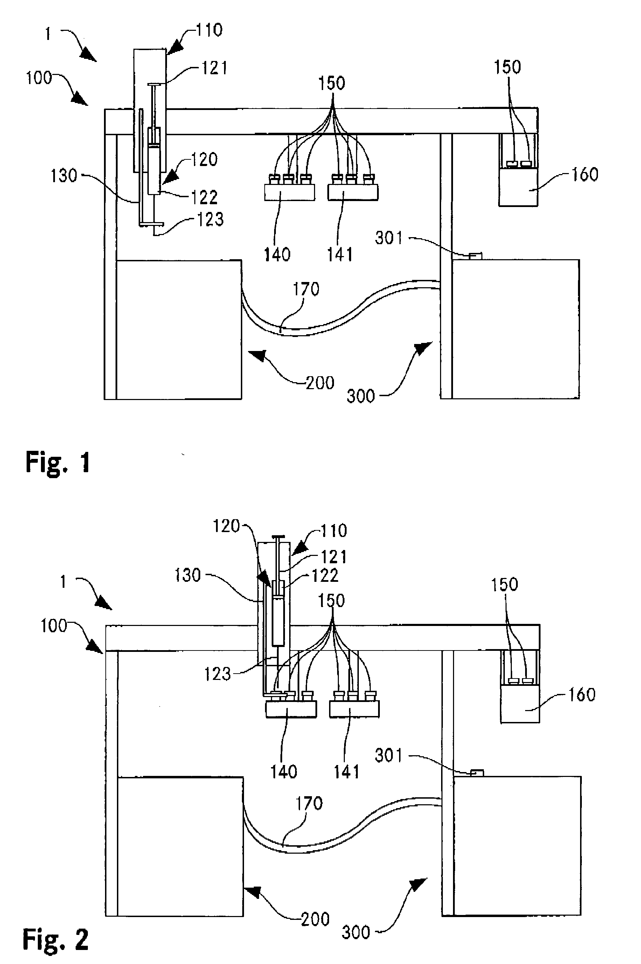

Figure 1 shows a schematic frontal view of an arrangement 1 comprising a sample preparation device 200 and an automatic analytic device 300 operated by a x,y,z-robot 100.

The sample preparation device 200 comprises a syringe headspace device as well as a loop headspace device. However, the sample preparation device 200 can also be capable to prepare samples for liquid injection, SPME, ITEX and further known sample preparation methods.

The arrangement 1 further comprises a x,y,z-robot 100 comprising a transport device 110 for transporting the syringe 120 between the sample preparation device 200 and the automatic analytic device 300. The syringe 120 comprises a piston 121, a barrel 122 and a needle 123, where the piston 121 is movable in a vertical direction relative to the barrel 122 in order to take in and expel a sample.

The syringe transport device 110 is also capable for transporting vials 150. Therefore the transport device comprises a vial pickup device 130. If the vials or the caps of the vials comprising magnetic metal, the vial pickup device 130 can be equipped with a magnet in order to pick up the vials.

While the transporting device 110 itself is spatial displaceable, the syringe 120 and the pickup device 130 are each movable in a vertical direction independent of each other. If e.g. a vial 150 has to be displaced, the syringe 120 can be reversed with respect to the vial 150, in particular to secure the needle of the syringe. The pickup device 130 can comprise a needle guide, wherewith the needle 123 can be supported during injection.

The x,y,z-robot 100 further comprises two vial racks 140, 141 for storing the vials and an incubator 160 for incubating vials 150, i.e. tempering the vials prior to the sample preparation by the sample preparation device 200.

In the syringe-mode, the syringe 120 takes in a sample from a vial 150 of the sample preparation device 200; then the sample is transferred by the x,y,z-robot in the syringe 120 to the injection port 301 of the automatic analytic device 300. The syringe 120 can be heated. However, in the loop-mode, the sample is transported from the sample preparation device 200 via a connection pipe 170 to the automatic analytic device 300.

In the present example, the automatic analytic device 300 is a gas chromatograph. The method will following be explained relating to the figures 1 to 4.

According to figure 1, some samples in vials 150 are incubated in incubator 160 and further samples in vials 150 are stored in the racks 140, 141.

In a first step, the transporting device 110 is moved by the x,y,z-robot 100 either to the vial rack 140, 14 or to the incubator 160 for picking up a vial 150. In figure 2, a vial of the rack 140 is picked up by the pickup device 130 of the transporting device 110. The syringe 120 is reversed in order to secure the needle 123.

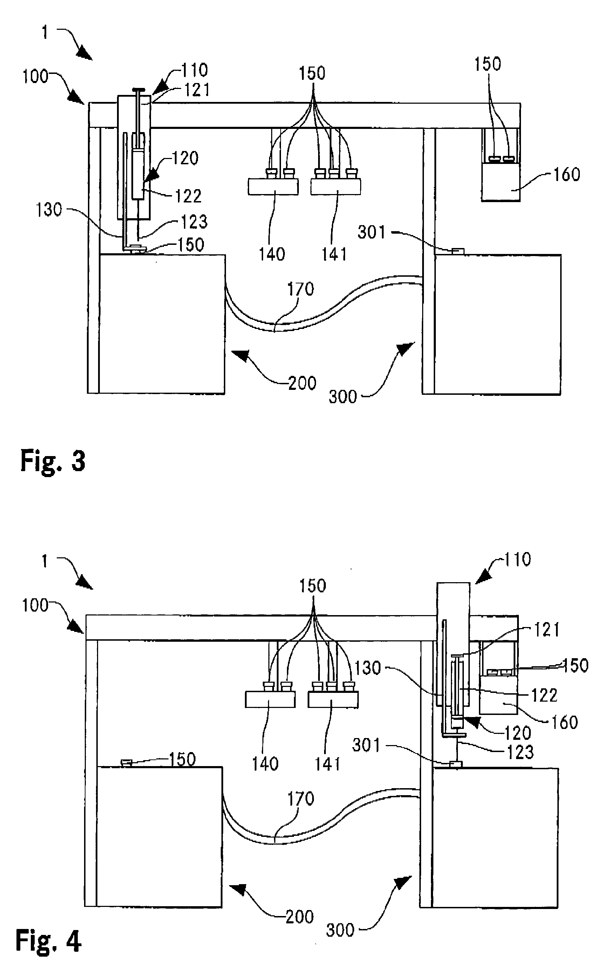

As can be seen from figure 3, the vial 150 is transported by the transporting device 110 to the sample preparation device 200 in order to prepare the sample.

If results of other portions of the same samples are available, a data processing unit (not shown) decides according to said results, which sample preparation device, either the syringe device or the loop device, shall be used for the present portion of the sample.

If the loop device is chosen, the sample is transported through the loop and the connection pipe 170 to the analytic device 300 automatically. However, if the syringe device is chosen, the syringe 120 penetrates the septum of the vial 150 by the needle 123, probably while the needle 123 is guided by the needle guide, and the piston 121 is moved in a direction out of the barrel 122 in order to take in the headspace of the sample of the vial 150. Figure 3 shows this state of the arrangement 1.

After, the syringe 120 is transported by the transporting device 110 and the x,y,z-robot 100 to the analytic device 300. The needle 123 penetrates the injector 301 and the piston 121 is pulled in the barrel 122 in order to inject the sample into the analytic device 300 as can be seen in figure 4.

Finally, a result of the analytic device 300 can be evaluated by the data processing unit. If a comparison with a decision value results in a value "pass", the analysis of the sample is finished. However, if it results in a value "fail", then
a. the other sample preparation is chosen to prepare another sample; and/or
b. a parameter of the subsequently used sample preparation device is changed; and/or
c. a parameter of the analytic device is adapted; and
d. a further sample is prepared by the sample preparation device 200 and is analysed by the analytic device 300.

The above steps can be repeated until the decision value Is "passed".

In summary, it is to be noted that the invention creates a method for analysing a sample which is efficient and results in an automatic way to improved result.

## Claims

1. Method for analysing a sample, using a plurality of sample preparation devices (200), and an automatic analytic device (300) for analysing the sample, wherein said plurality of sample preparation devices (200) and the automatic analytic device are connected to each other by a data processing unit in order to receive, process and send data from and/or to each one of said sample preparation devices and the automatic analytic device (300), **characterized by** the following steps:
a. preparing a first portion of the sample by a first sample preparation device (200);
b. analysing said first portion by the automatic analytic device (300) in order to get a first result;
c. comparing the first result with a value dependent decision criteria to get a first decision value or a second decision value by the data processing unit;
d. if the decision value is the second decision value, preparing a second portion of the same sample by the second sample preparation device (200) and analysing said second portion by the automatic analytic device (300) in order to get a second result;
e. comparing the second result with said value dependent decision criteria to get the first decision value or the second decision value by the data process unit;
f. repeating the preceding steps until the first decision value or another criteria is obtained.

2. Method according to claim 1, **characterized in that**, after one or more repeating of the steps, the method proceeds as follows:
a, a recent result is compared by the data processing unit with the value dependent decision criteria and, if available, former results to determine if going in the first direction "pass", that is the result is acceptable, or a second direction "fail", that is to perform a next step;
b. if the decision is to go in the second direction, preparing a further portion of the same sample by the second sample preparation device, whereby a parameter of the second sample preparation device or of the analytic device is adjusted, and analysing said further portion by the automatic analytic device in order to get a further result;
c. applying a value dependent decision criteria by comparing the further result and former results with the decision value by the data processing unit to determine: if going in a first direction "pass", that is the result is acceptable, or in a second direction "fail", that is to perform a next step.
d. repeating the preceding steps d) and e) until the decision to go in the first direction "pass" is taken, that is the analytic result is acceptable, or another criteria is applied, In particular to stop the analyses.

3. Method according to claim 1 or 2, **characterized in that** the data processing unit improves the automatic analytic device (300) according to a received result by adapting at least one parameter.

4. Method according to claim 3, **characterized in that** the automatic analytic device (300) comprises a plurality of different chromatographic channels, wherein the data processing unit decides according to a received result to use a specific chromatographic channel for analysing the subsequent portion of the sample.

5. Method according to one of claims 1 to 4, **characterized by** preparing any portion of sample by any of the sample preparation devices (200) before analysing said portion of sample.

6. Method according to one of claims 1 to 5, **characterized by** using a headspace device or a SPME-device as a sample preparation device (200).

7. Method according to claim 6, **characterized by** using an ITEX-device, a loop headspace device or a syringe headspace device as headspace device.

8. Method according to claim 7, wherein some portions of said sample are prepared by SPME or ITEX and other portions of sample are prepared by a loop headspace device.

9. Method according to one of claims 1 to 8, **characterized in that** a plurality of vials (150) comprising the different portions of said sample, are transported from a sample storage (140, 141, 160) to said sample preparation devices (200) by a transport device (100, 110), In particular by a x,y,z-robot (100).

10. Method according to claim 9, **characterized in that**, after transferring a part of a portion of sample from a vial (150) to the automatic analytic device (300), the vial (150) is transported back to the sample storage (140, 141, 160) by the transport device (100, 110).

11. Method according to claim 9, **characterized in that** at least a portion of sample is tempered at the sample storage in an incubator (160).

12. Arrangement for analysing a sample, in particular according to the method of one of claims 1 to 11, comprising a plurality of sample preparation devices (200), an automatic analytic device (300), a transporting device (100, 110) and an incubator (160) for incubating at least a portion of sample.

13. Arrangement according to claim 12, **characterized in that** at least one of said sample preparation devices (200) comprises a head space device, in particular a syringe head space device, a loop head space device or a ITEX head space device.

14. Arrangement according to claim 13, **characterized in that** at least one of said sample preparation devices (200) comprises a syringe head space device, wherein the transporting device (100, 110) is capable to transport the syringe.
